# EUROPEAN PATENT SPECIFICATION

(11) **EP 2 654 386 B1**
(45) Date of publication and mention of the grant of the patent: **01.03.2017**
(21) Application number: 13163327.3
(22) Date of filing: 11.04.2013
(51) Int. Cl.: H05B 41/288, H05B 41/292

(54) **Discharge lamp lighting device, and headlight and vehicle including same**
Entladungslampenbeleuchtungsvorrichtung, und Scheinwerfer und Fahrzeug damit
Dispositif d'éclairage à lampe à décharge et phare et véhicule l'incorporant

(30) Priority: 13.04.2012 JP 2012091589
(43) Date of publication of application: 23.10.2013
(73) Proprietor: Panasonic Intellectual Property Management Co., Ltd., Osaka-shi, Osaka 540-6207 (JP)
(72) Inventor: Suganuma, Kazutoshi, Osaka, 540-6207 (JP); Nakamura, Toshiaki, Osaka, 540-6207 (JP); Nishikawa, Masahiro, Osaka, 540-6207 (JP)
(74) Representative: Appelt, Christian W.

(56) References cited:
- WO-A1-2005/064997
- JP-A- 2002 216 982
- US-A- 5 481 163
- US-A1- 2003 160 576

## Description

### Field of the Invention

The present invention relates to a discharge lamp lighting device, which drives a discharge lamp including a high-intensity discharge lamp (HID lamp) such as a metal-halide lamp, and a headlight and a vehicle including the same.

### Background of the Invention

HID lamps are used in vehicle applications because of their high luminance. Since it is important for vehicles to ensure faster visibility, a discharge lamp is required to rapidly increase the luminous flux at startup. Conventionally, a discharge lamp lighting device implements a rapid increase of the luminous flux, for example, by supplying excessive power (hereinafter referred to as max power) compared to the rated power of the discharge lamp at the startup thereof. After startup, the discharge lamp lighting device reduces the power to a steady-state power along an exponential power curve (see, e.g., Japanese Patent Nos. 2946384 and 3280563). In this case, the steady-state power refers to the power at which the discharge lamp is stably turned on, the steady-state power being equal to or less than the rated power which is a maximum value at which the discharge lamp can be used safely.

The conventional discharge lamp lighting device executes a constant power control. Accordingly, when a source voltage is reduced, the conventional discharge lamp lighting device obtains a max power value by increasing an amount of current flowing through a circuit of the device. This may cause an increase in the heat generated in the circuit, and result in an abnormal operation of the circuit. Further, similar problems may also occur in the case when the max power value is reduced according to a decrease in the source voltage and the application of the max power is performed for a long time. An abnormal operation of the circuit due to the extended application of the max power may be prevented by significantly reducing the max power value. However, in this case, the lighting of the discharge lamp may become unstable.

From document US 5 481 163 A, a discharge lamp current controlling circuit is known. Document US 2003/160576 A1 discloses a discharge lamp igniter device and a projector device. From document WO 2005/ 064997 A1, a discharge lamp lighting apparatus and a lamp system using the lighting apparatus are known.

### Summary of the Invention

A problem underlying the present invention is how to prevent thermally abnormal operation of the circuit and to provide for an improved turn on of the lamp.

In view of the above, the present invention provides a discharge lamp lighting device capable of stably driving a discharge lamp without causing an abnormal operation of a circuit even if there is a decrease in a source voltage, or an increase in an ambient temperature or temperature of the device or the lamp, and a headlight and a vehicle using the same.

In accordance with a first aspect of the present invention, there is provided a discharge lamp lighting device, including: a power converter configured to receive a power supplied from a power source, convert the power into a voltage required by a discharge lamp and supply the voltage to the discharge lamp; and a controller configured to control the power converter to drive the discharge lamp, wherein the controller controls the power supplied to the discharge lamp to follow a predetermined power curve in which the power exponentially attenuates from a max power value to a steady-state power value with a lighting time, controls the power curve to change based on at least one of a source voltage of the power source, an ambient temperature, a device temperature, a discharge lamp temperature and a discharge lamp voltage, and sets a sustained period of the max power value of the power curve to a predetermined time period when the lighting of the discharge lamp is performed in a state where the discharge lamp temperature is equal to or less than a reference temperature.

According to the present invention, when the power curve supplied to the discharge lamp at the startup thereof is changed according to the source voltage, the ambient temperature, the temperatures of the device and the lamp, and/or the voltage of the discharge lamp, the sustained period of the max power value in the power curve is set to a constant period. Thus, it is possible to suppress the thermally abnormal operation of the circuit and stably turn on the discharge lamp.

In the discharge lamp lighting device, the sustained period of the max power value may be equal to or greater than 100 msec.

Preferably, the sustained period of the max power value is equal to or less than 10 sec.

The controller may decrease the max power value of the power curve according to a decrease in the source voltage.

The controller may preferably decrease the max power value of the power curve if the source voltage is equal to or less than a first voltage.

Further, the controller may decrease the max power value of the power curve according to an increase in the ambient temperature or the device temperature.

Preferably, the controller may decrease the max power value of the power curve if the ambient temperature or the device temperature is equal to or greater than a first temperature.

Further, the controller may decrease the max power value of the power curve according to at least one of a decrease in the source voltage and an increase in the ambient temperature or the device temperature, and, if the max power value is equal to or less than a first power value, sets the max power value to the first power value, and reduces the sustained period of the max power value to the predetermined time period or less.

Preferably, the first power value is equal to or greater than 1.2 times a rated power during stable lighting.

Further, the controller may change a reduction amount in the sustained period of the max power value according to the difference between the max power value and the first power value.

If the source voltage is equal to or less than a second voltage required to turn on the discharge lamp, the controller may reduce the max power value of the power curve to the first power value or less.

Preferably, if the ambient temperature is equal to or greater than a second temperature, the controller reduces the max power value of the power curve to the first power value or less.

Further, the controller may clock a lights-off time of the discharge lamp, and, when the lighting of the discharge lamp is performed in a state where the temperature of the discharge lamp is higher than the reference temperature, the controller may change the max power value of the power curve according to the lights-off time or the temperature of the discharge lamp immediately before the lighting of the discharge lamp.

Furthermore, the controller may clock a lights-off time of the discharge lamp, and, when the lighting of the discharge lamp is performed in a state where the temperature of the discharge lamp is higher than the reference temperature, the controller may change the sustained period of the max power value of the power curve according to the lights-off time or the temperature of the discharge lamp immediately before the lighting of the discharge lamp.

The controller may detect an abnormal increase in an input current based on a current value supplied from the power source, and, if the abnormal increase is detected, the controller may reduce the power supplied to the discharge lamp in a state where the sustained period of the max power value is set to the predetermined time period or less.

The controller may calculate a circuit loss value of the power converter based on the difference between an input power and an output power, and detects an abnormality of the circuit from the circuit loss value, and, when the abnormality of the circuit is detected, the controller may reduce the power supplied to the discharge lamp in a state where the sustained period of the max power value is set to the predetermined time period or less.

In accordance with a second aspect of the present invention, there is provided a headlight of a vehicle including the discharge lamp lighting device described above.

In accordance with a third aspect of the present invention, there is provided a vehicle including the discharge lamp lighting device described above.

### Brief Description of the Drawings

The objects and features of the present invention will become apparent from the following description of embodiments, given in conjunction with the accompanying drawings, in which:
FIG. 1 shows an illumination system of a vehicle including a discharge lamp lighting device in accordance with a first embodiment of the present invention;
FIG. 2 is a circuit diagram of the illumination system shown in FIG. 1;
FIG. 3 is a graph showing a power curve supplied to a discharge lamp by the discharge lamp lighting device in accordance with the first embodiment of the present invention;
FIG. 4A is a graph showing a max power value for a source voltage, and FIG. 4B is a graph showing a max power value for an ambient temperature;
FIG. 5 is a time chart showing voltage and current of the discharge lamp when the discharge lamp is powered;
FIG. 6 is a graph showing a relationship between the power curve and a relative illuminance curve;
FIG. 7 is a graph showing power curves supplied to the discharge lamp by a discharge lamp lighting device according to a first modification of the first embodiment;
FIGS. 8A to 8C are graphs showing examples of the relationship between the max power value and the source voltage according to a second modification of the first embodiment;
FIGS. 9A to 9C are graphs showing examples of the relationship between the max power value and the ambient temperature according to a third modification of the first embodiment;
FIG. 10 shows a circuit diagram of a discharge lamp lighting device in accordance with a second embodiment of the present invention;
FIG. 11A is a circuit diagram showing an example of the timer shown in FIG. 10, and FIG. 11B is a graph showing a relationship between an elapsed lights-off time and an amount of residual electric charge of a capacitor in the timer circuit shown in FIG. 11A;
FIG. 12A is a power curve supplied to the discharge lamp by the discharge lamp lighting device according to the second embodiment, FIG. 12B is a graph showing the max power value for the elapsed lights-off time, and FIG. 12C is a graph showing the temperature of the discharge lamp for the elapsed lights-off time;
FIG. 13A shows power curves supplied to the discharge lamp by the discharge lamp lighting device according to a first modification of the second embodiment, and FIG. 13B is a graph showing the sustained period of the max power value with respect to the elapsed lights-off time;
FIG. 14A shows power curves supplied to the discharge lamp by the discharge lamp lighting device according to a second modification of the second embodiment, FIG. 14B is a graph showing the max power value for the elapsed lights-off time, and FIG. 14C is a graph showing the sustained period of the max power value with respect to the elapsed lights-off time;
FIG. 15A is a graph showing a power curve supplied to the discharge lamp by a discharge lamp lighting device in accordance with a third embodiment of the present invention, and FIG. 15B is a graph showing a sustained period A for the difference between a lower limit of the max power value and a value to be set as the max power value;
FIGS. 16A and 16B are graphs showing the sustained period set for the difference between the lower limit and the set value of the max power value according to a modification of the third embodiment;
FIG. 17 is a graph showing power curves supplied to the discharge lamp by a discharge lamp lighting device in accordance with a fourth embodiment of the present invention;
FIG. 18A is a graph showing the source voltage decreased rapidly with respect to time elapsed after the start of lighting, and FIGS. 18B and 18C are graphs showing the input current and the output power at that time, respectively;
FIG. 19A is a graph showing the amount of reduction from Wp0 of the max power value (W) set based on the source voltage (V), and FIG. 19B is a graph showing the amount of reduction from Wp0 of the max power value (W) set based pm the ambient temperature;
FIG. 20 is a circuit diagram of a discharge lamp lighting device according to another modification; and
FIG. 21 is a circuit diagram of a discharge lamp lighting device according to still another modification.

### Detailed Description of the Embodiments

A discharge lamp lighting device in accordance with the present invention is provided in headlights of a vehicle using, e.g., HID lamps. The discharge lamp lighting device controls a power supplied to the discharge lamp such that the power changes according to a power curve in which the power exponentially attenuates from a predetermined max power value to a predetermined steady-state power value with the lights-on time. The power curve changes according to a source voltage, an ambient temperature, temperatures of the device and the lamp, and/or a voltage of the discharge lamp.

In the discharge lamp lighting device in accordance with the present invention, the power curve is controlled to hold the max power value for a certain sustained period regardless of a change in the max power value at a cold start when the lighting of the discharge lamp is performed in a state where the temperature of the discharge lamp is equal to or less than a reference temperature. With this configuration, even when the discharge lamp lighting device performs the constant power control and the current flowing through the circuit increases due to a reduction in the output voltage of a power source, the time to warm up the circuit is kept to be constant, thereby preventing thermally abnormal operation on the circuit.

Further, since the sustained period of the max power value is constant, the max power value can be set to a higher value as compared with a case of extending the sustained period. Thus, it is possible to suppress thermally abnormal operation of the circuit and stably turn on the discharge lamp. In addition, there may be exceptional cases when the max power value is needed to be reduced to a value at which the discharge lamp cannot be lit, e.g., when the lights-on is performed again after lights-on and lights-off of the lamp, or at a hot restart when the lighting of the discharge lamp is performed in a state where the temperature of the discharge lamp is higher than a reference temperature, at a high temperature or a low source voltage. In these cases, the sustained period of the max power value is preferably shortened, thereby ensuring the lighting startup performance of the discharge lamp while preventing thermally abnormal operation of the device circuit.

### (First Embodiment)

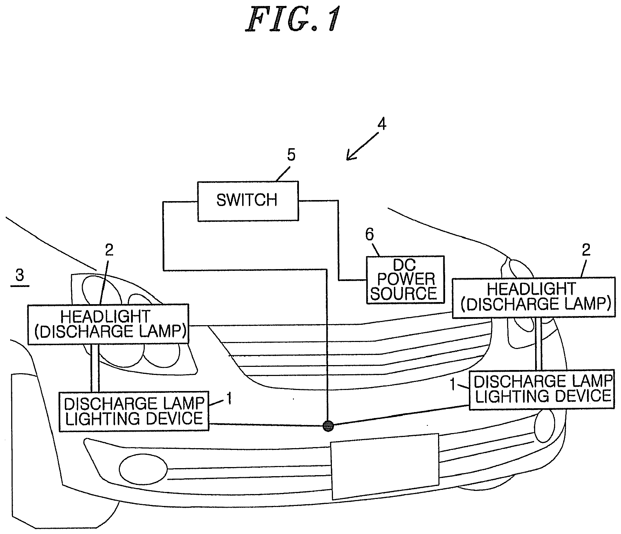

FIG. 1 shows a configuration of an illumination system 4 of a vehicle 3 having headlights and discharge lamp lighting devices 1 in accordance with a first embodiment of the present invention. The illumination system 4 includes discharge lamps 2 serving as headlights, the discharge lamp lighting devices 1 for driving the discharge lamps 2, and a 12V DC power source 6 connected to the discharge lamp lighting devices 1 via a switch 5. Alternatively, the discharge lamp lighting device 1 may be installed into the headlight.

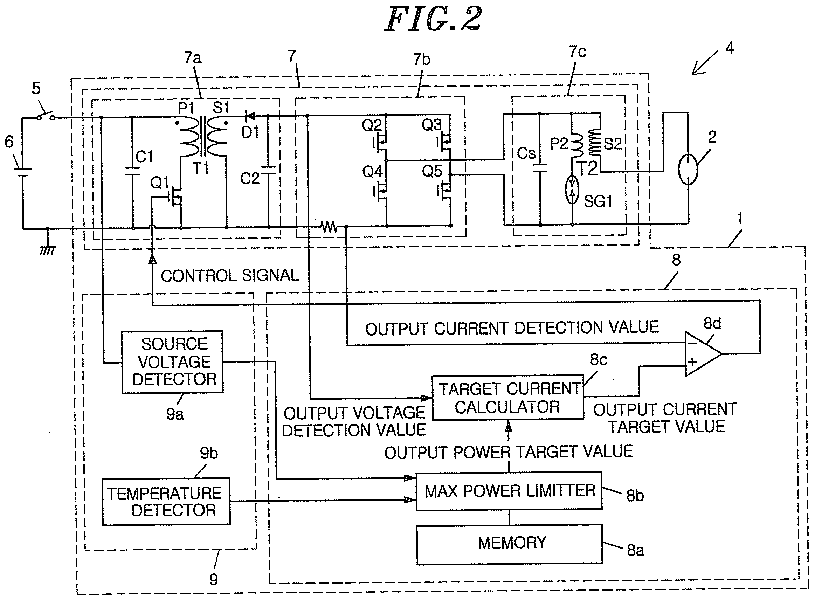

FIG. 2 is a circuit diagram of the illumination system 4. The discharge lamp lighting device 1 includes a power converter 7 which converts a source voltage (V) of the DC power source 6 into a voltage required by the discharge lamp 2. A controller 8 controls the power converter 7 to drive the discharge lamp 2. A detector 9 outputs detection values required for the controller 8.

The power converter 7 includes a DC/DC converter 7a, a full bridge inverter 7b which converts a DC voltage outputted from the DC/DC converter 7a into a low-frequency square-wave AC voltage, and an igniter 7c which converts the AC voltage into a high-voltage pulse and outputs the high-voltage pulse to the discharge lamp 2. The DC/DC converter 7a is formed of a flyback type, and steps up and down the voltage from the DC power source 6 into the voltage required by the discharge lamp 2 by changing a driving frequency or ON duty of a switching transistor (hereinafter referred to as transistor) Q1.

The detector 9 includes a source voltage detector 9a which detects a source voltage outputted from the DC power source 6 and outputs the source voltage to the controller 8. Further, the detector 9 includes a temperature detector 9b which detects an ambient temperature, the temperature of the lighting device and the temperature of the discharge lamp, and outputs the detected temperature to the controller 8.

Based on an output current detection value of the DC/DC converter 7a, the controller 8 controls the output power of the DC/DC converter 7a to follow a predetermined power curve which exponentially attenuates the power supplied to the discharge lamp 2 from a max power value to a steady-state power value with time after lighting. The controller 8 controls the power curve so as to change based on the values detected by the detector 9. At the time of the cold start, the controller 8 sets a sustained period of the max power value in the power curve to a constant period.

In the controller 8, a memory 8a stores a max power value, a steady-state power value, and a power curve. A max power limiter 8b corrects an output from the memory 8a based on the detection values of the detector 9.

The max power limiter 8b includes a table of information in which each of the detection values of the detector 9 is associated with a reduction amount of the max power value, and the like. The max power limiter 8b corrects and outputs the power curve outputted from the memory 8a based on the information.

Further, the controller 8 includes a target current calculator 8c and a differential amplifier 8d. The target current calculator 8c divides an output power target value from the max power limiter 8b by an output voltage detection value of the DC/DC converter 7a, and obtains an output current target value. The differential amplifier 8d amplifies and outputs a difference between the output current target value and the output current detection value of the DC/DC converter 7a. The output of the differential amplifier 8d is applied to the transistor Q1 as a control signal. That is, the controller 8 outputs the control signal to the transistor Q1 of the DC/DC converter 7a so that the output current detection value of the DC/DC converter 7a becomes the same as the output current target value. By the above-described configuration, the controller 8 controls the power curve which is outputted from the power converter 7 to the discharge lamp 2.

Hereinafter, an operation of the circuit shown in FIG. 2 will be described. The DC/DC converter 7a includes a transformer T1 having the transistor Q1 for output control, a smoothing capacitor C2, and a diode D1 on the downstream side of a smoothing capacitor C1. The inverter 7b includes transistors Q2 to Q5 which are connected in a full bridge configuration. The igniter 7c includes a transformer T2 and a storage capacitor Cs with a spark gap SG1 connected across the primary side of the transformer T2.

When the transistor Q1 is turned on while the switch 5 is turned on, a current flows through the transistor Q1 and a primary coil P1 of the transformer T1. However, since no current flows through a secondary coil S1 of the transformer T1 by the diode D1, the energy is stored in the transformer T1. Then, if the transistor Q1 is turned off, a current flows in the route of the secondary coil S1 of the transformer T1 → the smoothing capacitor C2 → the diode D1, and the energy stored in the transformer T1 is moved to the smoothing capacitor C2. Since the discharge lamp 2 is in an open state before lighting, the voltage of the capacitor C2 increases.

At this point, the transistors Q2 and Q5 forming a full bridge inverter are turned on, and the transistors Q3 and Q4 are turned off. Accordingly, the voltage of the capacitor Cs increases. When the voltage across the capacitor Cs is equal to or greater than a predetermined value, the spark gap SG1 is broken down, and a voltage is applied instantaneously to a primary coil P2 of the transformer T2. Further, a high voltage (about several tens of kV) obtained by multiplying the voltage by the turn-ratio of the transformer T2 is applied to a secondary coil S2 of the transformer T2. By the application of the high voltage, the discharge lamp 2 is broken down. At this moment, a current flows from the DC/DC converter 7a to the discharge lamp 2, and the discharge lamp 2 starts an arc discharge and is turned on.

After the discharge lamp 2 is turned on, the output of the full bridge inverter 7b is alternately controlled at a specified time intervals. The controller 8 compares the output current detection value with the output current target value by the differential amplifier 8d, and controls the output voltage of the DC/DC converter 7a by outputting a control signal corresponding to the difference, to the transistor Q1 of the DC/DC converter 7a. With the above operation, the discharge lamp lighting device 1 can stably turn on the discharge lamp 2.

### (Control of Power Curve)

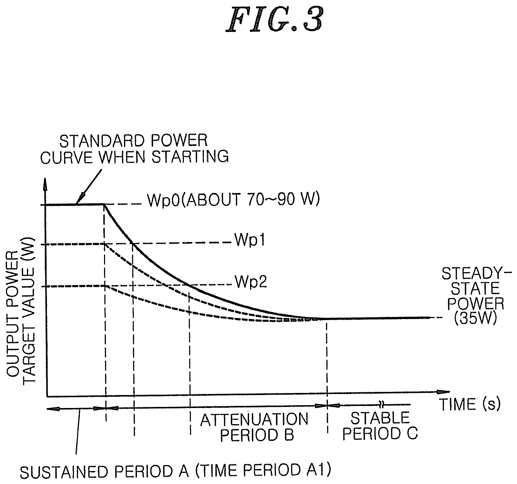

FIG. 3 is a graph showing a power curve stored in the memory 8a, which is represented by a solid line. In the graph, a vertical axis represents an output power target value (W), and a horizontal axis represents an elapsed time (s) from the start of lighting. The power curve corresponds to the discharge lamp 2 using a mercury-free lamp of 35W rated power. With the power curve, the power supplied to the discharge lamp exponentially attenuates from a max power value Wp0 (70 to 90W) to a steady-state power value (e.g., rated power 35W) as time elapses. The steady-state power value refers to a power value at which the discharge lamp is stably turned on, and is equal to or less than the rated power at which the discharge lamp can be used safely. The max power value Wp0 is set to a value of, e.g., about twice the rated power of the discharge lamp 2. A DC power source generally provided in a common vehicle, has a steady-state voltage of 12V at an initial use stage and a rated voltage of 14V.

As the lighting of the discharge lamp 2, there are a cold start and a hot restart. At the cold start, lighting is performed in a state where the temperature of the discharge lamp is equal to or less than a reference temperature (e.g., 25°C). At the hot restart, relighting is performed in a state where the temperature of the discharge lamp is higher than the reference temperature after turning off the lamp once. The power curve shown in FIG. 3 is of a cold start. In the power curve, the power attenuates down to the steady-state power value during an attenuation period B (e.g., about 40 to 50 seconds) after an elapse of a sustained period A(s) during which the max power value Wp0 is maintained for a predetermined time period A1 (e.g., about 4 seconds).

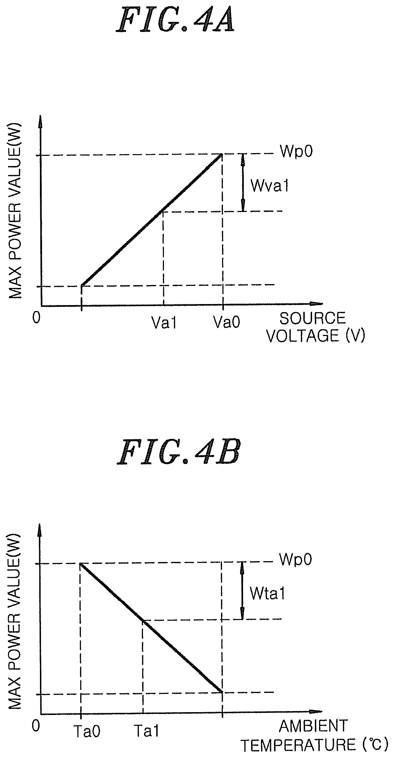

In a stable period C after the power arrives at the steady-state power value, stable lighting is performed steadily by outputting a constant power. Further, FIG. 3 shows power curves when the max power value Wp0 is reduced to predetermined values Wp1 and Wp2 based on an environmental temperature (the ambient temperature, the device temperature, and/or the lamp temperature), and the source voltage, respectively, which will be later described with reference to FIGS. 4A and 4B. In the following description, although the ambient temperature is used as an example of the environmental temperature, the device temperature or both of the ambient temperature and the device temperature may be used.

FIG. 4A is a graph showing the max power value (W) set in accordance with a decrease in the source voltage (V) of the DC power source 6, the source voltage being detected and outputted by the detector 9. FIG. 4B is a graph showing the max power value (W) set in accordance with an increase in the ambient temperature (°C), the ambient temperature being detected by and outputted from the detector 9. The max power limiter 8b includes information about the graphs shown in FIGS. 4A and 4B in the form of a table.

If the output from the detector 9 is an initial value Va0, the max power value is set to Wp0. If the output from the detector 9 is decreased from Va0 to Va1, a decrease amount Wva1 from Wp0 is specified based on the graph. Further, if the ambient temperature is a room temperature Ta0, the max power value is set to Wp0. If the ambient temperature is Ta1 higher than Ta0, a decrease amount Wta1 from Wp0 is specified based on the graph. Thus, a decrease amount of the max power value is determined by the sum of Wva1 and Wta1. As a result, the max power value Wp1 (FIG. 3) is obtained by the calculation of Wp0-Wva1-Wta1.

The max power limiter 8b outputs the obtained max power value Wp1 after a limitation to the target current calculator 8c. The max power limiter 8b sets the power curve of the max power value Wp1 (<Wp0) indicated by a dotted line in FIG. 3. In the power curve, the sustained period A is set to the predetermined time period A1. The attenuation period B is obtained by calculating based on the max power value outputted from the max power limiter 8b. It is also possible to employ a configuration in which the information of the power curve corresponding to each max power value is stored in the memory 8a, and the max power limiter 8b reads the information of the corresponding power curve from the memory 8a. For example, if the max power value is further decreased to Wp2 (<Wp1) (FIG. 3), the max power limiter 8b sets the sustained period A to the predetermined time period A1, and sets the power curve of the max power value Wp2 indicated by a dotted line.

It is also possible to control the max power value based on the source voltage or the ambient temperature by using the graph of FIG. 4A or 4B.

In the discharge lamp lighting device 1, even when the current flowing through the circuit increases due to a reduction in the output voltage of the DC power source under constant power control, the sustained period A of the max power value is set to the predetermined time period A1, thereby preventing thermally abnormal operation of the circuit. Thus, even when the discharge lamp lighting device 1 is provided in, e.g., an engine room of a vehicle and is used under high temperature, the circuit of the device 1 can be protected from thermal stress, and also the luminous flux of the discharge lamp 2 can be quickly raised. Further, since the discharge lamp lighting device 1 does not increase the amount of attenuation per unit time by shortening the attenuation period B of the power curve, it is possible to stably turn on the discharge lamp 2 without flickering.

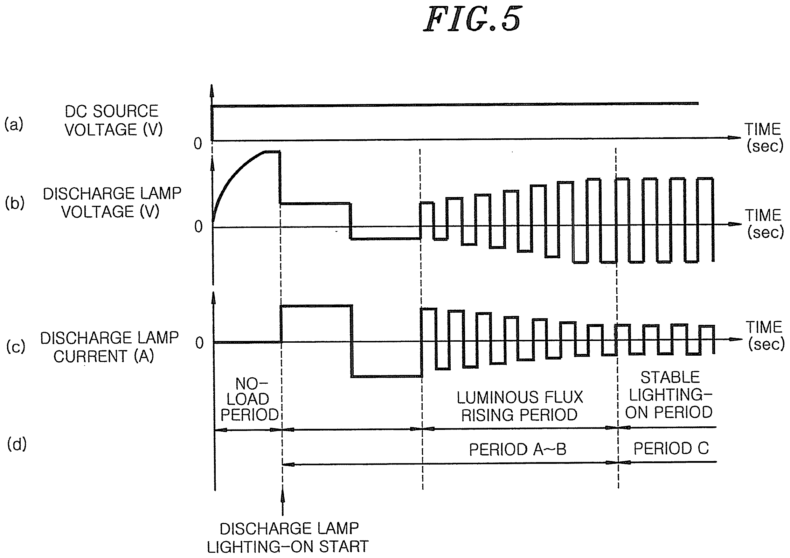

The criteria of setting the sustained period A of the max power value will be described. FIG. 5 shows voltage and current of the discharge lamp over time from the lighting start of the discharge lamp to the stable lighting with the steady-state power. In FIG. 5, (a) shows a DC source voltage, (b) shows a discharge lamp voltage, (c) shows a discharge lamp current, and (d) shows names of periods, and periods A to C of the power curve. The discharge lamp 2 starts the discharge by a high voltage (start-up) pulse outputted from the igniter 7c after the lapse of a no-load period before lighting.

Immediately after the start of the discharge, an electrode heating period having a cycle longer than that of a lighting frequency during stable lighting is provided. During the electrode heating period, a voltage of the discharge lamp 2 is low compared to the stable lighting period, and the power supplied to the discharge lamp 2 is high. Accordingly, the current flowing through the discharge lamp 2 is maximized, and the amount of heat generated in the discharge lamp 2 becomes higher. As a result, the electrode temperature of the discharge lamp 2 rises rapidly, and the discharge is stabilized at an early stage.

When changing the power supplied to the discharge lamp 2 in the electrode heating period, there is a possibility that the discharge lamp 2 is turned off halfway. Therefore, it is desirable that the power supplied to the discharge lamp 2 is constant during the electrode heating period. The length of the electrode heating period varies depending on the state (temperature, etc.) of the discharge lamp 2, and the maximum value is generally set to around 100 ms.

For example, from the viewpoint of the discharge lamp 2 lifespan (deterioration of the electrode, and cloudiness/blackening of the lamp), generally, the current-time product for the electrode heating period is set to about 60 to 70 mAsec or less. In consideration of the restart or the like of the discharge lamp 2, the discharge lamp current may be equal to or less than 1 A. When the discharge lamp current is, e.g., about 0.8 A, the electrode heating period is 70 mAsec/0.8 A = 87.5 msec. Thus, considering some manufacturing errors and the like, it is preferable that the predetermined time period A1 in which the max power value is maintained is set to at least 100 msec.

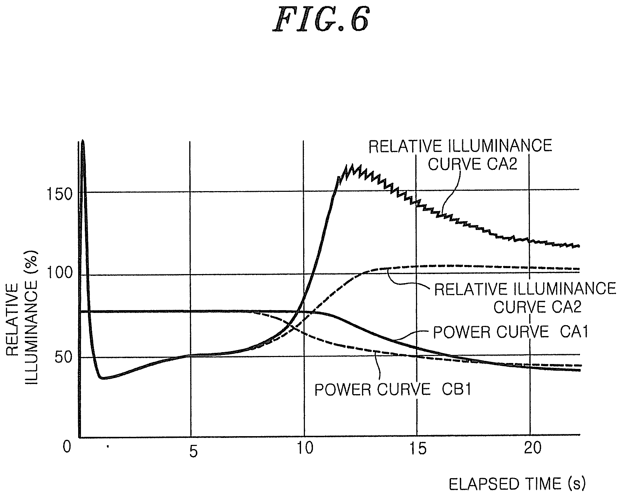

FIG. 6 shows an example of a power curve applied to the discharge lamp 2, and a luminous flux increase curve generated by applying the power according to the power curve. In the graph, the relative illuminance when the power is applied to the discharge lamp 2 according to the power curve CA1 is expressed as the relative illuminance curve CA2, and the relative illuminance when the power is applied to the discharge lamp 2 according to the power curve CB1 is expressed as a relative illuminance curve CB2. As in the power curve CA1, when the max power value is continuously outputted for longer than 10 sec, the luminous flux rises steeply. Assuming the illuminance in stable lighting of the lamp is 100%, a flash of illuminance of 130% or more is generated

Accordingly, in the case of a vehicle headlamp, a pedestrian may be dazzled. Further, the power supplied to the discharge lamp 2 becomes excessive and causes premature wear of the electrode. Consequently, the lifespan of the discharge lamp is shortened. Furthermore, since large current flows through the circuit of the lighting device, thermal stress is larger and a risk of thermally abnormal operation increases. Therefore, in order to prevent these problems, it is desirable to suppress the sustained period of the max power value to 10 sec or less. From the above, the predetermined time period A1 in which the max power value is maintained is preferably set to be equal to or more than 100 msec and equal to or less than 10 sec.

### (First Modification of First Embodiment)

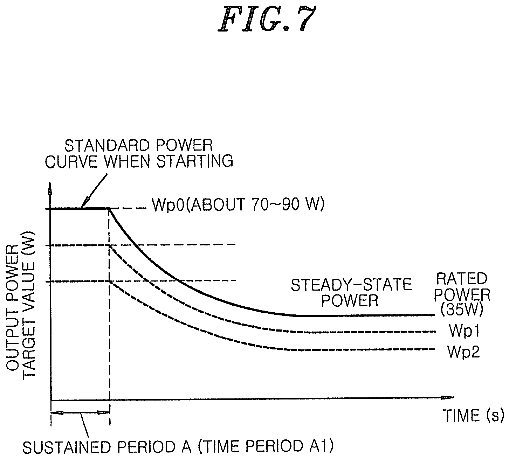

FIG. 7 shows a power curve used by a discharge lamp lighting device according to a first modification of the first embodiment. As illustrated in FIG. 7, the max power value is changed to Wp1 and Wp2, which are lower than Wp0, based on the source voltage of the DC power source 6 and/or environmental temperature, and the steady-state power value is respectively changed to a low value of Wb1 (< 35W) and Wb2 (< Wb1). Also in this case, the sustained period A of the max power value is set to the predetermined time period A1. A method of setting the power curve is the same as in the discharge lamp lighting device 1 of the first embodiment, and a repetitive description thereof will be omitted. By employing the above configuration, the discharge lamp lighting device 1 can suppress thermally abnormal operation of the circuit, and stably turn on the discharge lamp 2.

### (Second Modification of First Embodiment)

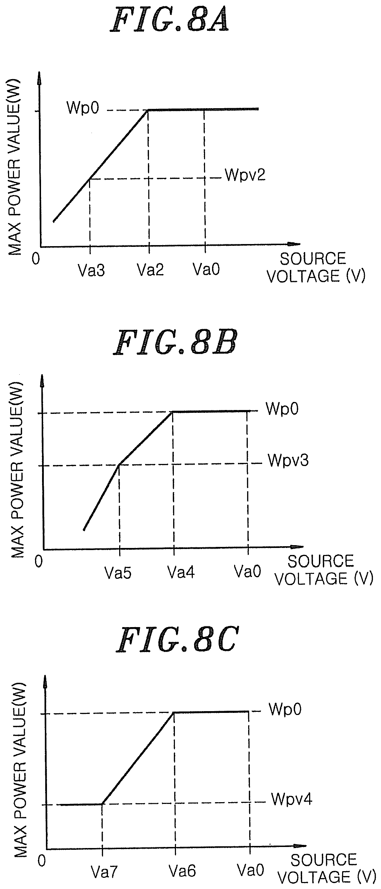

FIGS. 8A to 8C show modification examples of the graph (FIG. 4A) showing a relationship between the max power value (W) and the source voltage (V) which are stored as tables in the max power limiter 8b shown in FIG. 2.

With the graph shown in FIG. 8A, when the source voltage ranges from the initial value Va0 to Va2 (first voltage), the max power value is set to an initial value Wp0. While the source voltage is reduced from Va2 to Va3, the max power value is reduced from the initial value Wp0 to Wpv2 in proportion to the reduction amount. Thus, it is possible to quickly increase the luminous flux of the discharge lamp 2 over a wide range of the source voltage. The value of Va2 is determined according to the output performance of the circuit of the device. However, in the case of a storage battery with 14V rated voltage for use in the headlamp of a vehicle, the value of Va2 is set to about 10 to 13V considering a voltage drop in the circuit.

With the graph shown in FIG. 8B, when the source voltage ranges from the initial value Va0 to Va4, the max power value is set to the initial value Wp0. When the source voltage is between Va4 and Va5, the max power value is reduced to Wpv3 at a low reduction rate with a relatively gentle slope. When the source voltage is equal to or less than Va5, the max power value is reduced at a high reduction ratio with a relatively steep slope in order to more reliably prevent thermally abnormal operation of the device circuit.

With the graph shown in FIG. 8C, when the source voltage ranges from the initial value Va0 to Va6, the max power value is set to the initial value Wp0. When the source voltage decreases from Va6 to Va7, the max power value is reduced from the initial value Wp0 to a lower limit Wpv4 in proportion to the reduction amount of the source voltage, the lower limit Wpv4 being the minimum power required to turn on the discharge lamp 2. When the source voltage is equal to or less than Va7, the max power value is fixed to the lower limit Wpv4. Thus, even when the source voltage is low, the discharge lamp lighting device 1 can stably turn on the discharge lamp 2 while suppressing thermally abnormal operation of the circuit.

Although the graphs are illustrated as the above, another graph may be used to set a power curve in which the max power value is decreased in response to a reduction in the source voltage.

### (Third Modification of First Embodiment)

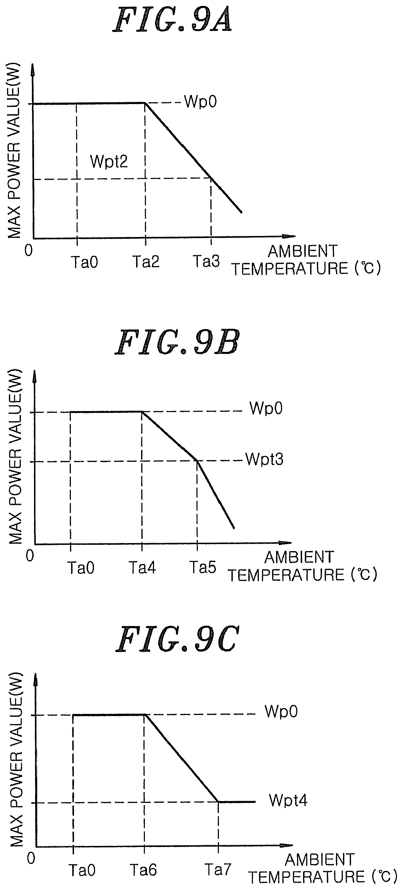

FIGS. 9A to 9C show modification examples of the graph shown in FIG. 4B and represent a relationship between the max power value (W) and the ambient temperature in the case of using the ambient temperature as an example of the environmental temperature to be used in the max power limiter 8b shown in FIG. 2.

With the graph shown in FIG. 9A, when the ambient temperature ranges from an initial value Ta0 to Ta2 (first temperature), the max power value is set to an initial value Wp0. When the ambient temperature increases from Ta2 to Ta3, the max power value is reduced from the initial value Wp0 to Wpt2 in proportion to the amount of increase in temperature. Accordingly, it is possible to quickly increase the luminous flux of the discharge lamp 2 over a wide range of the temperature. The value of the first temperature Ta2 is determined according to the output performance of the device circuit. However, in the case of a storage battery with 14V rated voltage for use in the headlamp of a vehicle, the value of Ta2 is set to about 80 ~ 100°C in consideration of the thermal stress of components (e.g., junction temperature of the transistor Q1) in the circuit.

With the graph shown in FIG. 9B, when the ambient temperature ranges from the initial value Ta0 to Ta4, the max power value is set to the initial value Wp0. When the ambient temperature increases from Ta4 to Ta5, the max power value is reduced to Wpt3 at a low reduction rate with a relatively gentle slope. When the ambient temperature is equal to or greater than Ta5, the max power value is reduced at a high reduction ratio with a relatively steep slope in order to more reliably prevent thermally abnormal operation of the device circuit.

With the graph shown in FIG. 9C, when the ambient temperature ranges from the initial value Ta0 to Ta6, the max power value is set to the initial value Wp0. When the ambient temperature increases from Ta6 to Ta7, the max power value is reduced from the initial value Wp0 to a lower limit Wpt4 in proportion to the amount of increase in temperature, the lower limit Wpt4 being the minimum power required to turn on the discharge lamp 2. When the ambient temperature is equal to or greater than Ta7, the max power value is fixed to the lower limit Wpt4. Thus, even when the ambient temperature is high, the discharge lamp lighting device 1 can stably turn on the discharge lamp 2 while suppressing thermally abnormal operation of the circuit.

Instead of the above graphs, other graphs may be used as long as the graphs are illustrated to set the curve showing the reduction of the max power target value according to an increase in the ambient temperature or the temperature of the discharge lamp lighting device 1.

### (Second Embodiment)

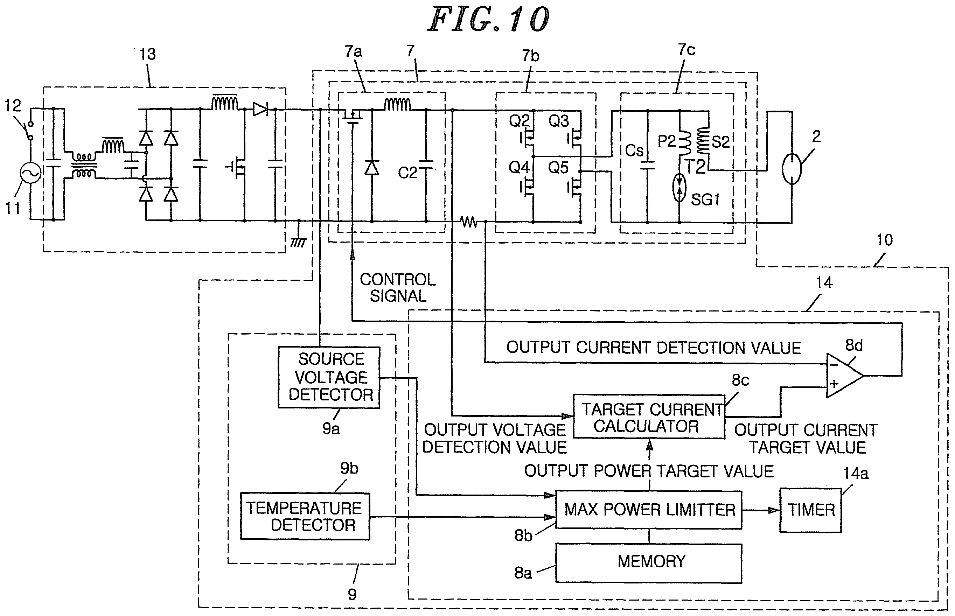

FIG. 10 shows a circuit diagram of a discharge lamp lighting device 10 in accordance with a second embodiment of the present invention. The same reference numerals are assigned to the same or similar components as those of the discharge lamp lighting device 1 in accordance with the first embodiment, and a repetitive description will be omitted. The discharge lamp lighting device 10 controls to limit either or both of the max power value and the sustained period of the max power value in the hot restart in which relighting is performed in the state where a period, until the discharge lamp 2 is turned on again from when it is turned off, is short and the temperature of the discharge lamp 2 is higher than the reference temperature (e.g., 25°C).

Since the discharge lamp 2 is turned on with a lower power in the hot restart than in the cold start, the discharge lamp lighting device 10 performs the limitation based on the temperature of the discharge lamp immediately before relighting or the detection value of the elapsed lights-off time. By employing such a control, it is possible to prevent the same power as in the cold start from being supplied to the discharge lamp 2 in the hot restart and the luminous flux from increasing accordingly, thereby suppressing premature wear of the electrode and occurrence of a flash. Thus, the discharge lamp lighting device 10 can stably turn on the discharge lamp 2 while suppressing thermally abnormal operation of the circuit.

The discharge lamp lighting device 10 uses a commercial AC power source 11. The commercial AC power source 11 is connected to an AC/DC converter 13 via a switch 12. A DC voltage outputted from the AC/DC converter 13 is supplied to the discharge lamp lighting device 10 as a source voltage. The discharge lamp lighting device 10 has a controller 14 having a configuration different from that of the discharge lamp lighting device 1. Among the components of the controller 14, the same reference numerals are assigned to the same or similar components as those of the controller 8, and a repetitive description will be omitted.

In the controller 14, a timer 14a is connected to the max power limiter 8b. The timer 14a clocks a time period OT (lights-off time) until the switch 12 is switched on to turn on the discharge lamp 2 after the switch 12 is switched off to turn off the discharge lamp 2, and outputs the clocking results to the max power limiter 8b. The max power limiter 8b corrects and outputs the max power value based on the clocking results from the timer 14a in addition to the detection value from the detector 9. The other circuit operation is similar to that of the discharge lamp lighting device 1. Further, the second embodiment to be described below and modifications thereof can be implemented in the same manner even when the DC power source 6 used in the discharge lamp lighting device 1 of the first embodiment is used as a power source instead of the commercial AC power source 11.

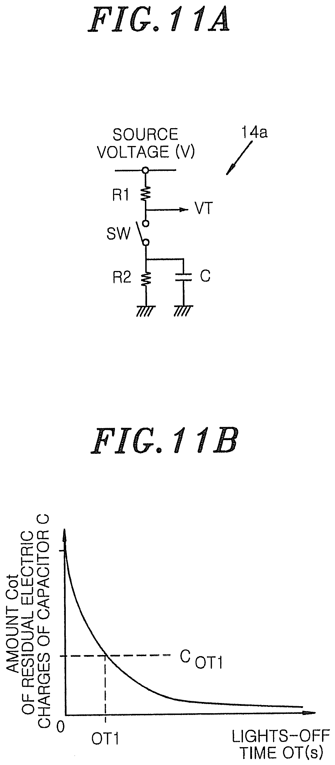

FIG. 11A shows an example of the timer 14a. The source voltage (V) is applied to one end of the timer 14a, and the other end of the timer 14a is grounded. The timer 14a includes two resistors R1 and R2 connected in series and a capacitor C connected in parallel with the resistor R2. Between the two resistors R1 and R2, a switch SW moving in conjunction with the switch 12 is provided. The switch SW may be the switch 12. The discharge lamp 2 is turned off by switching off the switch 12 (and the switch SW). Accordingly, the capacitor C starts discharging the charges that have been accumulated during the lighting of the discharge lamp 2.

Then, when the switch 12 (and the switch SW) is turned on and the discharge lamp 2 is turned on, a potential VT representing the amount of residual electric charges of the capacitor C is outputted to the max power limiter 8b. FIG. 11B is a graph showing a relationship between the amount C_{OT} (represented by the potential VT) of the residual electric charges of the capacitor C and the elapsed lights-off time OT(s). As an example, it shows a residual electric charge amount C_{OT1} of the capacitor C for the lights-off time OT1. The max power limiter 8b calculates the temperature of the discharge lamp or the elapsed lights-off time based on the residual electric charge amount C_{OT} of the capacitor C.

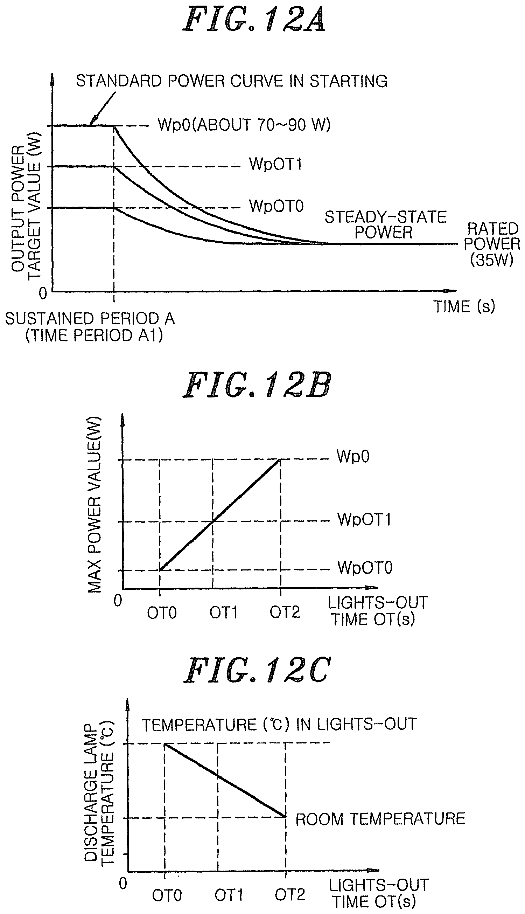

FIG. 12A is a power curve showing the power supplied to the discharge lamp 2 by the discharge lamp lighting device 10. FIG. 12B is a graph showing the max power value (W) for the elapsed lights-off time (s). FIG. 12C is an example of a graph showing the temperature (°C) of the discharge lamp for the elapsed lights-off time (s). The max power limiter 8b subtracts the reduction obtained based on the lights-off time OT0 ~ OT2 and the reduction obtained based on the detection value of the detector 9, from the max power value Wp0. Thus, in the hot restart, the discharge lamp lighting device 10 can stably turn on the discharge lamp 2 while suppressing thermally abnormal operation of the circuit.

As shown in FIG. 12C, when the elapsed lights-off time is a very short time OT0, the temperature of the discharge lamp 2 is the same as the temperature when the discharge lamp 2 is turned off, so that the discharge lamp can be most readily turned on again. Accordingly, as shown in FIG. 12B, the reduction is set such that the max power value is significantly reduced from Wp0 to WpOT0. When the elapsed lights-off time is OT1, the reduction is set such that the max power value is reduced from Wp0 to WpOT1. As the time elapses from OT1 to OT2, the temperature of the discharge lamp 2 becomes lower and approaches the temperature in the cold start. If the temperature of the discharge lamp 2 becomes a reference temperature (room temperature 25°C), the reduction in the max power value Wp0 is set to zero.

### (First Modification of Second Embodiment)

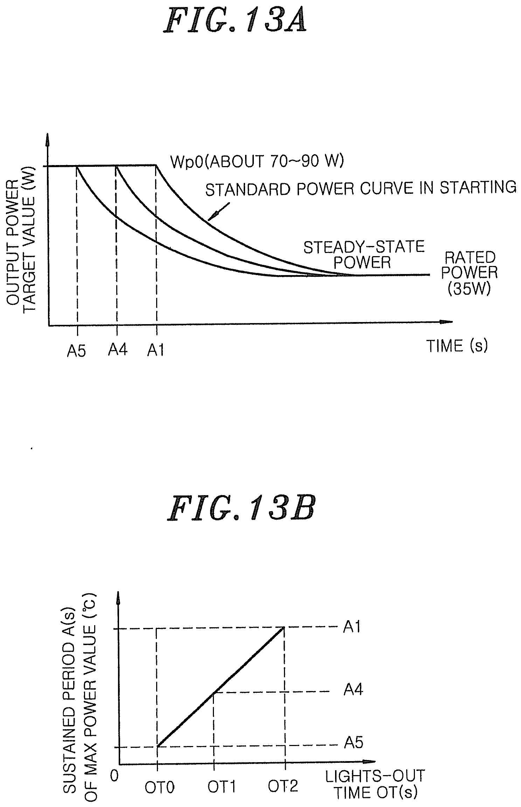

FIG. 13A shows a power curve according to a first modification of the discharge lamp lighting device in accordance with the second embodiment, and FIG. 13B shows a graph showing the sustained period A of the max power value for the elapsed lights-off time. In the first modification, if the elapsed lights-off time is a short time OT0, the sustained period A of the max power value is shortened from A1 to A5. This is why the time required for heating the electrode of the discharge lamp 2 to be stable is short in the hot restart.

When the elapsed lights-off time is OT1, the sustained period A of the max power value is shortened from A1 to A4. As the lights-off time goes from OT1 to OT2, the temperature of the discharge lamp 2 becomes lower and approaches the temperature in the cold start. If the temperature of the discharge lamp 2 becomes a reference temperature (room temperature 25°C), the sustained period A of the max power value is set to the initial value A1. Thus, in the hot restart, the discharge lamp lighting device 10 can stably turn on the discharge lamp 2 while suppressing thermally abnormal operation of the circuit.

### (Second Modification of Second Embodiment)

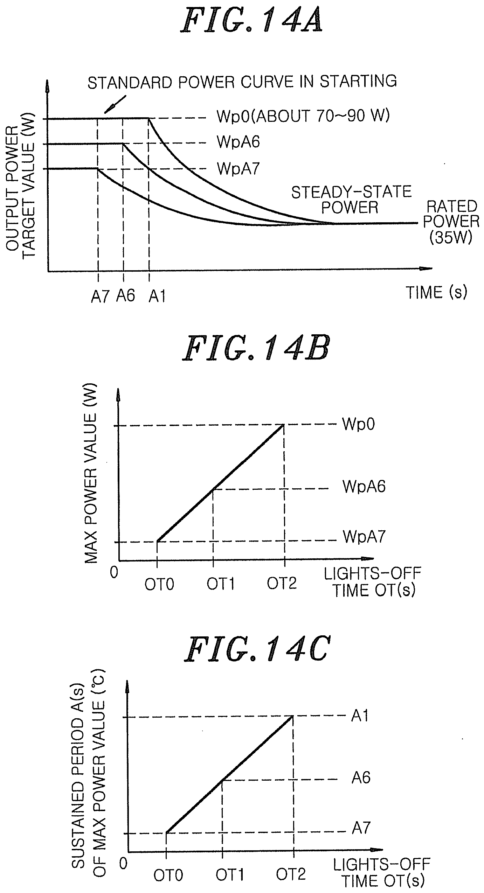

FIG. 14A is a graph showing a power curve of a second modification of the discharge lamp lighting device according to the second embodiment. FIG. 14B is a graph showing the max power value (W) for the elapsed lights-off time OT(s), and FIG. 14C is a graph showing the sustained period A(s) of the max power value for the elapsed lights-off time OT(s). In this modification, both of the max power value and the sustained period thereof are reduced according to the elapsed lights-off time.

In other words, as the elapsed lights-off time is shorter, the max power value and the sustained period are greatly reduced. In these figures, when the elapsed lights-off time is OT0 which is the shortest, the max power value is set to WpA7, and the sustained period A is set to A7. As the elapsed lights-off time becomes longer from OT0 to OT1, the max power value is increased to WpA6, and the sustained period is increased to A6. When the elapsed lights-off time becomes OT2 and the lighting conditions are the same as those in the cold start, the max power value is set to Wp0, and the sustained period A becomes the time period A1.

With this modification, the discharge lamp lighting device can set the max power value to a higher value, and set the sustained period to be shorter than when either of the max power value and the sustained period thereof is changed. According to the second modification of the discharge lamp lighting device in accordance with the second embodiment, it is possible to prevent thermally abnormal operation of the lighting device circuit, thereby preventing the occurrence of a flash due to the increase of the luminous flux in the hot restart and premature wear of the electrode and the like, and achieving rapid relighting of the discharge lamp.

### (Third Embodiment)

A discharge lamp lighting device according to a third embodiment is intended to solve a problem that occurs when the max power value is set to a value near a lower limit Wmin1 (first power value) required to start the lighting of the discharge lamp 2, and when the ambient temperature is around an upper limit at which the circuit of the discharge lamp lighting device 1 of the first embodiment is operable. That is, it is intended to solve a problem that a lighting failure or a turning-off of the discharge lamp 2 occurs when the power applied to the discharge lamp 2 is less than the lower limit, for example. A configuration of the discharge lamp lighting device is the same as that of the discharge lamp lighting device 1 of the first embodiment, and will be described using the reference numerals of the components of the discharge lamp lighting device 1.

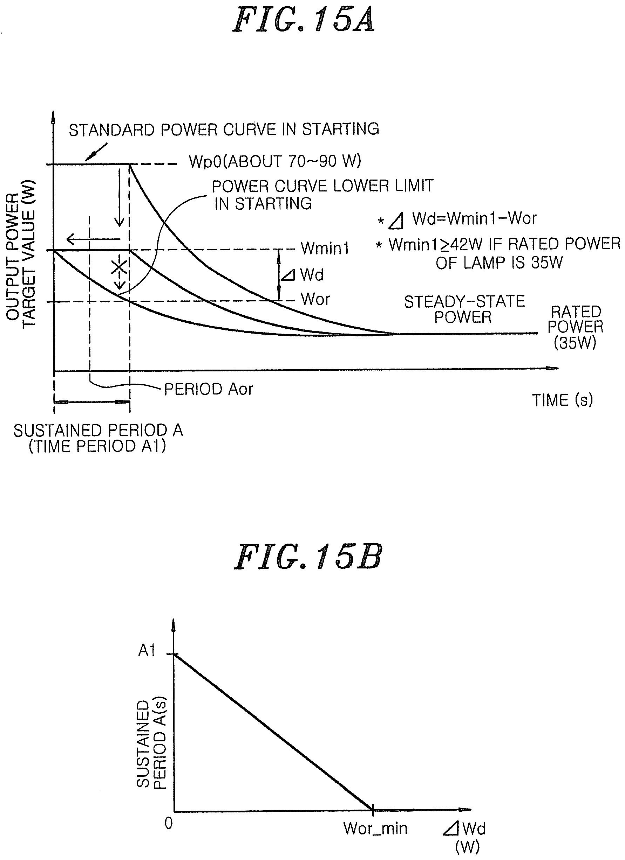

FIG. 15A is a graph showing a power curve of a discharge lamp lighting device according to the third embodiment, and FIG. 15B is a graph showing the sustained period A set based on a difference between a lower limit Wmin1 and a set value Wor of the max power value to be set based on the detection value of the detector 9. A max power limiter (equivalent to the max power limiter 8b shown in FIG. 2) of the discharge lamp lighting device of the third embodiment, as a first step, obtains the amount of a reduction in the max power value Wp0 based on at least one of the source voltage from the DC power source and the environmental temperature, and then obtains the set value Wor to be set to the max power value.

The max power limiter 8b, as a second step, compares the obtained Wor with the lower limit Wmin1 and obtains a difference ΔWd. If the set value Wor is less than the lower limit Wmin1, the max power limiter 8b sets the max power value to the lower limit Wmin1, and sets the sustained period A of the max power value to a time period Aor shorter than the time period A1 according to the difference ΔWd between the set value Wor and the lower limit Wmin1. By performing this process, the discharge lamp 2 can be turned on, and thermally abnormal operation of the device circuit is prevented. In the second step, if the set value Wor is equal to or greater than the lower limit Wmin1, the max power limiter 8b sets the max power value to the obtained set value Wor.

The graph shown in FIG. 15B is an example of a case where the sustained period is linearly reduced to 0 from A1 with respect to the difference ΔWd. When the difference ΔWd reaches a maximum value Wor_min, the sustained period A is set to 0(s).

The above processes may be performed by the max power limiter 8b including an operation processing system including a CPU or FPGA which executes the above processes in a software, or may be implemented in a hardware circuit capable of performing the above processes. The discharge lamp lighting device according to the third embodiment can prevent a lighting failure or fade-out of the discharge lamp 2 and prevent the power from being lower than the minimum power required to start lighting of the discharge lamp 2, particularly when the source voltage of the DC power source is lowered abnormally or the ambient temperature rises abnormally.

### (Modification of Third Embodiment)

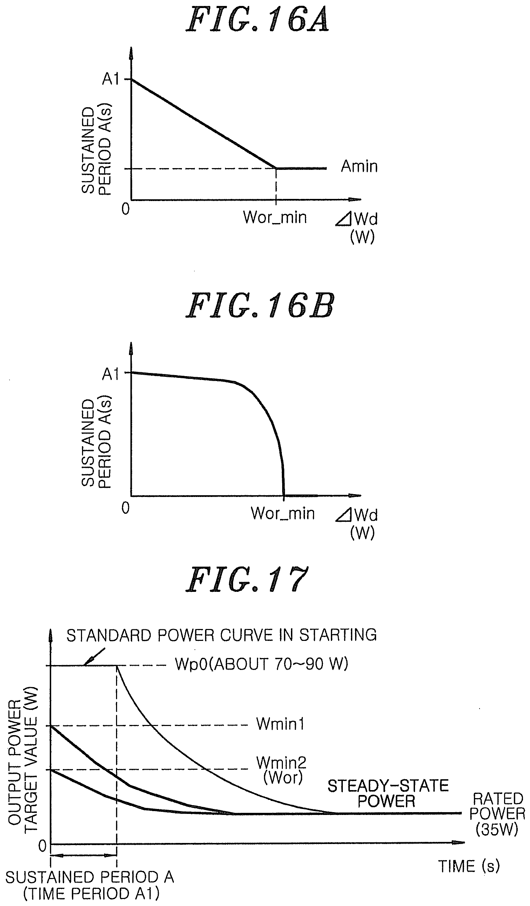

FIGS. 16A and 16B are modification examples of the graph showing the sustained period A(s) set according to the difference between the lower limit Wmin1 and the set value Wor of the max power value. As shown in FIG. 16A, the sustained period A has a lower limit Amin. In the case where a mercury-free HID lamp for the headlight of a vehicle which has 35 W of rated power is used as the discharge lamp 2, for example, the lower limit Wmin1 of the max power value is set to be at least 1.2 times the rated power at which the discharge lamp 2 can be normally turned on, i.e., at least 42W, and the lower limit Amin of the sustained period is set to at least several hundred msec. The set value Wor of the max power value is a value to stably start lighting of the discharge lamp (start lighting 100% in several hundreds of tests) even in the case where the lighting time has passed several thousands of hours (the life of the lamp is generally set to a lighting time of 1000 ~ 3000 hours).

If the difference ΔWd increases, thermally abnormal operation of the circuit is likely to occur and, to prevent such an occurrence, the power supplied to the discharge lamp 2 should be largely reduced. In the graph of FIG. 16B, the sustained period A is reduced exponentially with the increase of ΔWd. Accordingly, the discharge lamp lighting device according to the modification of the third embodiment can more reliably suppress thermally abnormal operation of the circuit even in low source voltage and high temperature conditions, and stably turn on the discharge lamp 2.

### (Fourth Embodiment)

A discharge lamp lighting device according to a fourth embodiment is intended to cope with, e.g., a case where the source voltage of the DC power source 6 is lowered abnormally and becomes equal to or less than a lower limit required to turn on the discharge lamp 2, or the ambient temperature becomes equal to or higher than an upper limit required to stably turn on the discharge lamp 2, in the discharge lamp lighting device 1 according to the first embodiment. Specifically, as shown in FIGS. 8C and 9C, in the case where the source voltage is equal to or less than the lower limit Va7 (second voltage) and/or the ambient temperature is equal to or greater than the upper limit Ta7 (second temperature), the max power value is set to a value less than the lower limit Wmin1, i.e., Wmin2 (< Wmin1) at which the discharge lamp 2 does not emit light. Accordingly, the discharge lamp lighting device according to the fourth embodiment suppresses thermally abnormal operation of the device circuit when the source voltage is lowered abnormally or when the environmental temperature rises abnormally.

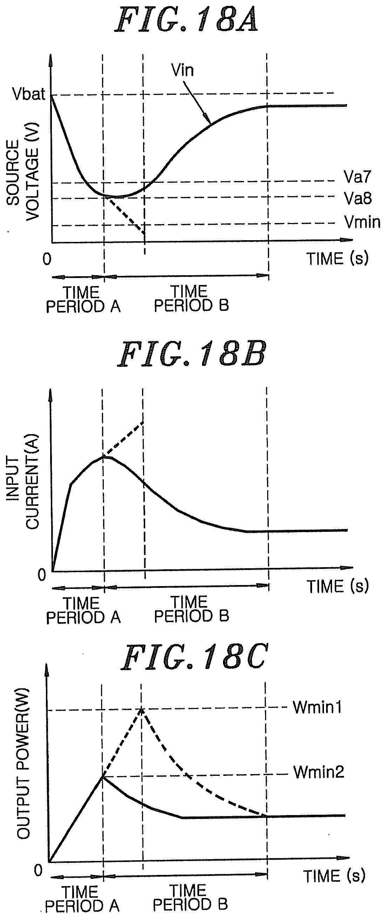

FIG. 17 shows a power curve used in the discharge lamp lighting device according to the fourth embodiment. FIG. 18A shows a case where the source voltage (V) is decreased rapidly with respect to an elapsed time after the start of lighting, and FIGS. 18B and 18C show the input current (A) and the output power (W) at that time, respectively.

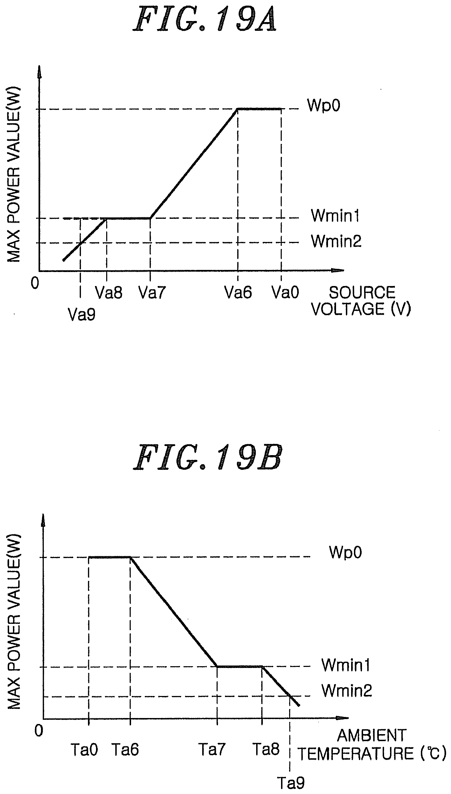

FIG. 19A shows the max power value (W) set according to the source voltage (V). After the source voltage is reduced to Va7, the max power value is set to Wmin1 until the source voltage becomes Va8. The max power value is reduced down to the lower limit Wmin2 when the source voltage is less than Va8. Accordingly, the discharge lamp 2 may be turned off, but an increase in the input current is suppressed, and thermally abnormal operation of the device circuit is suppressed in the discharge lamp lighting device according to the fourth embodiment.

FIG. 19B is a graph showing the max power value (W) set according to the ambient temperature. In a period in which the ambient temperature ranges from Ta7 to Ta8, the max power value is set to Wmin1. When the ambient temperature becomes higher than Ta8, the max power value is reduced to Wmin2. Accordingly, although the discharge lamp 2 may be turned off, an increase in the input current is suppressed, and thermally abnormal operation of the circuit is prevented. The output power value Wmin2 set when the source voltage decreases abnormally and the ambient temperature increases abnormally is stored in advance in the memory 8a or the max power limiter 8b.

### (Other Modifications)

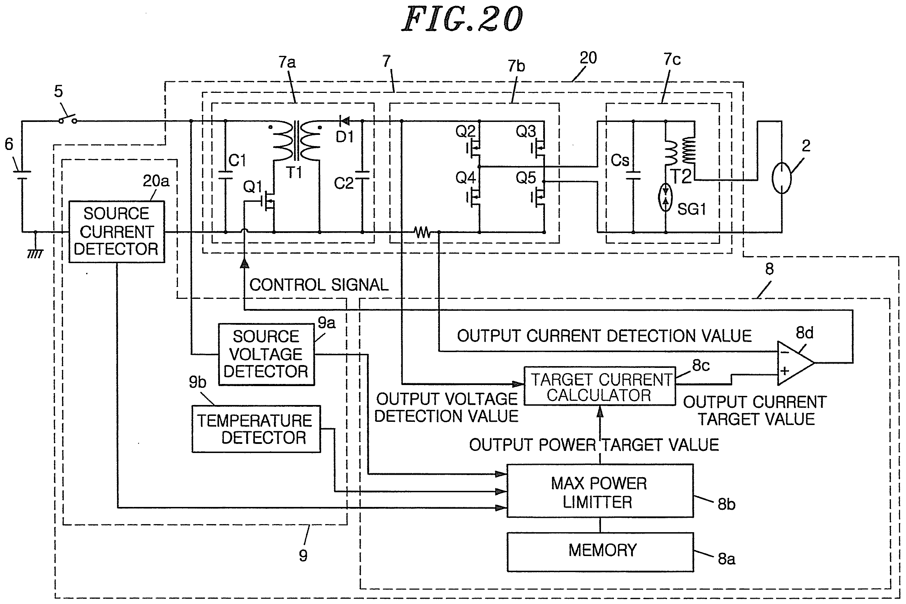

FIG. 20 shows a circuit diagram of a discharge lamp lighting device 20 according to another embodiment. The same reference numerals are assigned to the same or similar components as those of the discharge lamp lighting device 1 according to the first embodiment, and a repetitive description thereof will be omitted. The discharge lamp lighting device 20 further includes a source current detector 20a in the detector 9. The source current detector 20a detects a current supplied from the DC power source 6. By adding the source current detector 20a, the max power limiter 8b more reliably prevents thermally abnormal operation of the circuit.

The max power limiter 8b detects an abnormal increase in the input current due to abnormality of characteristics of the circuit components or a sudden change in the characteristics of the discharge lamp 2 based on the current value of the DC power source 6 detected by the source current detector 20a. When an abnormality is detected, the max power limiter 8b reduces the power supplied to the discharge lamp 2 in a state where the sustained period A of the max power value is set to the predetermined time period A1 or less, thereby more reliably suppressing thermally abnormal operation of the circuit.

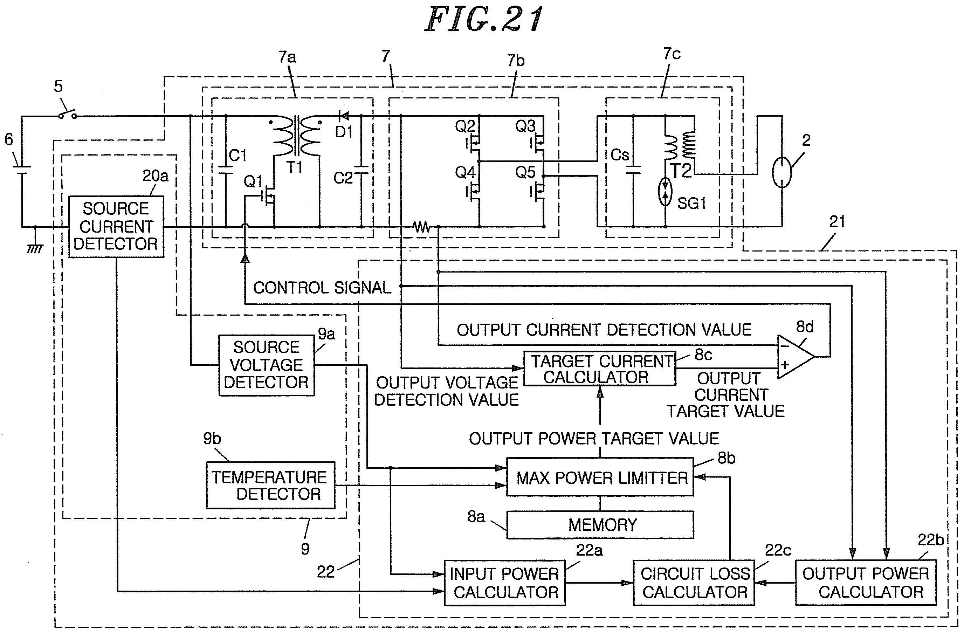

FIG. 21 shows a circuit diagram of a discharge lamp lighting device 21 according to still another embodiment. The same reference numerals are assigned to the same or similar components as those of the discharge lamp lighting device 1 according to the first embodiment, and a repetitive description thereof will be omitted. The discharge lamp lighting device 21 includes a controller 22 having a configuration different from that of the discharge lamp lighting device 20 shown in FIG. 20. In addition to the configuration of the controller 8 of the discharge lamp lighting device 1, the controller 22 further includes an input power calculator 22a, an output power calculator 22b, and a circuit loss calculator 22c.

The input power calculator 22a calculates an input power based on the detection values of the source voltage detector 9a and the source current detector 20a. The output power calculator 22b calculates the output power of the DC/DC converter 7a. The circuit loss calculator 22c calculates a circuit loss of the DC/DC converter 7a based on the difference between the input power and the output power, and outputs the calculated circuit loss value to the max power limiter 8b. The max power limiter 8b detects abnormality of the circuit based on the circuit loss value. When an abnormality is detected, the max power limiter 8b reduces the power supplied to the discharge lamp 2 in a state where the sustained period A of the max power value is set to the predetermined time period A1 or less, thereby reliably suppressing thermally abnormal operation of the circuit.

The present invention is not limited to the configuration of embodiments and modifications described above, and various modifications can be made within a scope which does not change the spirit of the present invention. Further, it is possible to variously combine embodiments and modifications described above within the spirit of the present invention.

The discharge lamp lighting device of the present invention can be used in an illumination system using a discharge lamp which emits light using an arc discharge, such as a high intensity discharge (HID) lamp, in addition to the headlight of a vehicle.

While the invention has been shown and described with respect to the embodiments, it will be understood by those skilled in the art that various changes and modification may be made without departing from the scope of the invention as defined in the following claims.

## Claims

1. A discharge lamp lighting device (1, 20), comprising:
a power converter (7) configured to receive a power supplied from a power source (6), convert the power into a voltage required by a discharge lamp (2) and supply the voltage to the discharge lamp; and
a controller (8) configured to control the power converter to drive the discharge lamp,
wherein the controller controls the power supplied to the discharge lamp (2) to follow a predetermined power curve in which the power exponentially attenuates from a max power value (W, Wp0) to a steady-state power value with a lighting time, controls the power curve to change based on at least one of a source voltage of the power source, an ambient temperature, a device temperature, a discharge lamp temperature and a discharge lamp voltage,
**characterised in that**
the controller sets a sustained period (A) of the max power value of the power curve to a predetermined time period (A1) when the lighting of the discharge lamp is performed in a state where the discharge lamp temperature is equal to or less than a reference temperature.

2. The discharge lamp lighting device of claim 1, wherein the sustained period (A) of the max power value (Wp0) is equal to or greater than 100 msec.

3. The discharge lamp lighting device of claim 1 or 2, wherein the sustained period of the max power value (Wp0) is equal to or less than 10 sec.

4. The discharge lamp lighting device of any one of claims 1 to 3, wherein the controller (8) decreases the max power value (Wp0) of the power curve according to a decrease in the source voltage.

5. The discharge lamp lighting device of claim 4, wherein the controller (8) decreases the max power value of the power curve if the source voltage (Va0, Va1, Va2, Va3) is equal to or less than a first voltage.

6. The discharge lamp lighting device of any one of claims 1 to 5, wherein the controller decreases the max power value (Wp0, Wp1, Wp2, W) of the power curve according to an increase in the ambient temperature (Ta0, Ta1, Ta2, Ta3) or the device temperature.

7. The discharge lamp lighting device of claim 6, wherein the controller (8) decreases the max power value (Wp0, Wp1, Wp2, W) of the power curve if the ambient temperature (Ta0, Ta1, Ta2, Ta3) or the device temperature is equal to or greater than a first temperature.

8. The discharge lamp lighting device of claim 1, wherein the controller (8) decreases the max power value (Wp0) of the power curve according to at least one of a decrease in the source voltage and an increase in the ambient temperature or the device temperature, and, if the max power value (Wp0) is equal to or less than a first power value, sets the max power value to the first power value, and reduces the sustained period (A) of the max power value to the predetermined time period or less.

9. The discharge lamp lighting device of claim 8, wherein the first power value is equal to or greater than 1.2 times a rated power during stable lighting.

10. The discharge lamp lighting device of claim 8 or 9, wherein the controller (8) changes a reduction amount in the sustained period (A) of the max power value (Wp0) according to the difference between the max power value and the first power value.

11. The discharge lamp lighting device of any one of claims 8 to 10, wherein if the source voltage is equal to or less than a second voltage required to turn on the discharge lamp (2), the controller (8) reduces the max power value (Wp0) of the power curve to the first power value or less.

12. The discharge lamp lighting device of any one of claims 8 to 11, wherein if the ambient temperature is equal to or greater than a second temperature, the controller (8) reduces the max power value of the power curve to the first power value or less.

13. The discharge lamp lighting device of any one of claims 1 to 12, wherein the controller (8) clocks a lights-off time of the discharge lamp (2), and when the lighting of the discharge lamp (2) is performed in a state where the temperature of the discharge lamp is higher than the reference temperature, the controller (8) changes the max power value of the power curve according to the lights-off time or the temperature of the discharge lamp (2) immediately before the lighting of the discharge lamp.

14. The discharge lamp lighting device of any one of claims 1 to 13, wherein the controller (8) clocks a lights-off time of the discharge lamp (2), and when the lighting of the discharge lamp (2) is performed in a state where the temperature of the discharge lamp is higher than the reference temperature, the controller changes the sustained period (A) of the max power value of the power curve according to the lights-off time or the temperature of the discharge lamp immediately before the lighting of the discharge lamp.

15. A headlight (2) of a vehicle (3) comprising the discharge lamp lighting device (1, 20) described in any one of claims 1 to 14.

16. A vehicle (3) comprising the discharge lamp lighting device (1, 20) described in any one of claims 1 to 14.

## Patentansprüche

1. Entladungslampen-Beleuchtungsvorrichtung (1, 20), umfassend:
- einen Stromrichter (7), der konfiguriert ist, um Energie zu empfangen, die von einer Energiequelle (6) zugeführt wird, um die Energie in eine Spannung umzuwandeln, die von einer Entladungslampe (2) benötigt wird, und um die Spannung der Entladungslampe zuzuführen; und
- ein Steuergerät (8), das konfiguriert ist, um den Stromrichter zu steuern, um die Entladungslampe anzusteuern,
wobei das Steuergerät die Energie steuert, die der Entladungslampe (2) zugeführt wird, damit sie einer vorbestimmten Energiekurve folgt, in der sich die Energie von einem maximalen Energiewert (W, Wp0) bis auf einen stationären Energiewert mit einer Beleuchtungszeit exponentiell abschwächt, und die Energiekurve steuert, damit sie sich basierend auf mindestens einem von einer Quellspannung der Energiequelle, einer Umgebungstemperatur, einer Vorrichtungstemperatur, einer Entladungslampentemperatur und einer Entladungslampenspannung ändert,
**dadurch gekennzeichnet, dass**
- das Steuergerät eine nachhaltige Periode (A) des maximalen Energiewertes der Energiekurve auf einen vorbestimmten Zeitraum (A1) einstellt, wenn die Beleuchtung der Entladungslampe in einem Zustand ausgeführt wird, in dem die Entladungslampentemperatur gleich oder kleiner als eine Referenztemperatur ist.

2. Entladungslampen-Beleuchtungsvorrichtung nach Anspruch 1, wobei die nachhaltige Periode (A) des maximalen Energiewertes (Wp0) gleich oder größer als 100 ms ist.

3. Entladungslampen-Beleuchtungsvorrichtung nach Anspruch 1 oder 2, wobei die nachhaltige Periode des maximalen Energiewertes (Wp0) gleich oder kleiner als 10 s ist.

4. Entladungslampen-Beleuchtungsvorrichtung nach einem der Ansprüche 1 bis 3, wobei das Steuergerät (8) den maximalen Energiewert (Wp0) der Energiekurve gemäß einer Verringerung der Quellspannung verringert.

5. Entladungslampen-Beleuchtungsvorrichtung nach Anspruch 4, wobei das Steuergerät (8) den maximalen Energiewert der Energiekurve verringert, falls die Quellspannung (Va0, Va1, Va2, Va3) gleich oder kleiner als eine erste Spannung ist.

6. Entladungslampen-Beleuchtungsvorrichtung nach einem der Ansprüche 1 bis 5, wobei das Steuergerät den maximalen Energiewert (Wp0, Wp1, Wp2, W) der Energiekurve gemäß einer Zunahme der Umgebungstemperatur (Ta0, Ta1, Ta2, Ta3) oder der Vorrichtungstemperatur verringert.

7. Entladungslampen-Beleuchtungsvorrichtung nach Anspruch 6, wobei das Steuergerät (8) den maximalen Energiewert (Wp0, Wp1, Wp2, W) der Energiekurve verringert, falls die Umgebungstemperatur (Ta0, Ta1, Ta2, Ta3) oder die Vorrichtungstemperatur gleich oder größer als eine erste Temperatur ist.

8. Entladungslampen-Beleuchtungsvorrichtung nach Anspruch 1, wobei das Steuergerät (8) den maximalen Energiewert (Wp0) der Energiekurve gemäß mindestens einer von einer Verringerung der Quellspannung und einer Erhöhung der Umgebungstemperatur oder der Vorrichtungstemperatur verringert, und falls der maximale Energiewert (Wp0) gleich oder kleiner als ein erster Energiewert ist, den maximalen Energiewert auf den ersten Energiewert einstellt und die nachhaltige Periode (A) des maximalen Energiewertes auf den vorbestimmten Zeitraum oder weniger einstellt.

9. Entladungslampen-Beleuchtungsvorrichtung nach Anspruch 8, wobei der erste Energiewert gleich oder größer als 1,2-mal eine Nennenergie während der konstanten Beleuchtung ist.

10. Entladungslampen-Beleuchtungsvorrichtung nach Anspruch 8 oder 9, wobei das Steuergerät (8) einen Reduzierungsbetrag in der nachhaltigen Periode (A) des maximalen Energiewertes (Wp0) gemäß dem Unterschied zwischen dem maximalen Energiewert und dem ersten Energiewert ändert.

11. Entladungslampen-Beleuchtungsvorrichtung nach einem der Ansprüche 8 bis 10, wobei, falls die Quellspannung gleich oder kleiner als eine zweite Spannung ist, die benötigt wird, um die Entladungslampe (2) einzuschalten, das Steuergerät (8) den maximalen Energiewert (Wp0) der Energiekurve auf den ersten Energiewert oder weniger reduziert.

12. Entladungslampen-Beleuchtungsvorrichtung nach einem der Ansprüche 8 bis 11, wobei, falls die Umgebungstemperatur gleich oder größer als eine zweite Temperatur ist, das Steuergerät (8) den maximalen Energiewert der Energiekurve auf den ersten Energiewert oder weniger reduziert.

13. Entladungslampen-Beleuchtungsvorrichtung nach einem der Ansprüche 1 bis 12, wobei das Steuergerät (8) eine Licht-Ausschaltzeit der Entladungslampe (2) taktet, und wenn die Beleuchtung der Entladungslampe (2) in einem Zustand erfolgt, in dem die Temperatur der Entladungslampe höher als die Referenztemperatur ist, das Steuergerät (8) den maximalen Energiewert der Energiekurve gemäß der Licht-Ausschaltzeit oder der Temperatur der Entladungslampe (2) sofort vor der Beleuchtung der Entladungslampe ändert.

14. Entladungslampen-Beleuchtungsvorrichtung nach einem der Ansprüche 1 bis 13, wobei das Steuergerät (8) eine Licht-Ausschaltzeit der Entladungslampe (2) taktet, und wenn die Beleuchtung der Entladungslampe (2) in einem Zustand erfolgt, in dem die Temperatur der Entladungslampe höher als die Referenztemperatur ist, das Steuergerät die nachhaltige Periode (A) des maximalen Energiewertes der Energiekurve gemäß der Licht-Ausschaltzeit oder der Temperatur der Entladungslampe sofort vor der Beleuchtung der Entladungslampe ändert.

15. Scheinwerfer (2) eines Fahrzeugs (3), das die Entladungslampen-Beleuchtungsvorrichtung (1, 20) nach einem der Ansprüche 1 bis 14 umfasst.

16. Fahrzeug (3), umfassend die Entladungslampen-Beleuchtungsvorrichtung (1, 20) nach einem der Ansprüche 1 bis 14.

## Revendications

1. Dispositif d'allumage de lampe à décharge (1, 20), comprenant :
un convertisseur de puissance (7) configuré pour recevoir une puissance fournie par une source de puissance (6), convertir la puissance en une tension requise par une lampe à décharge (2) et fournir la tension à la lampe à décharge ; et
un contrôleur (8) configuré pour commander le convertisseur de puissance pour commander la lampe à décharge,
dans lequel le contrôleur commande la puissance fournie à la lampe à décharge (2) de manière à ce qu'elle suive une courbe de puissance prédéterminée dans laquelle la puissance est atténuée exponentiellement d'une valeur de puissance maximum (W, Wp0) à une valeur de puissance de régime permanent avec un temps d'allumage, commande la courbe de puissance de manière à ce qu'elle change sur la base d'au moins l'une d'une tension de source de la source de puissance, d'une température ambiante, d'une température de dispositif, d'une température de lampe à décharge et d'une tension de lampe à décharge,
**caractérisé en ce que**
le contrôleur établit une période de maintien (A) de la valeur de puissance maximum de la courbe de puissance à une période de temps prédéterminée (A1) lorsque l'allumage de la lampe à décharge est effectué dans un état dans lequel la température de lampe à décharge est inférieure ou égale à une température de référence.

2. Dispositif d'allumage de lampe à décharge selon la revendication 1, dans lequel la période de maintien (A) de la valeur de puissance maximum (Wp0) est supérieure ou égale à 100 ms.

3. Dispositif d'allumage de lampe à décharge selon la revendication 1 ou 2, dans lequel la période de maintien de la valeur de puissance maximum (Wp0) est inférieure ou égale à 10 s.

4. Dispositif d'allumage de lampe à décharge selon l'une quelconque des revendications 1 à 3, dans lequel le contrôleur (8) diminue la valeur de puissance maximum (Wp0) de la courbe de puissance conformément à une diminution de la tension de source.

5. Dispositif d'allumage de lampe à décharge selon la revendication 4, dans lequel le contrôleur (8) diminue la valeur de puissance maximum de la courbe de puissance si la tension de source (Va0, Va1, Va2, Va3) est inférieure ou égale à une première tension.

6. Dispositif d'allumage de lampe à décharge selon l'une quelconque des revendications 1 à 5, dans lequel le contrôleur diminue la valeur de puissance maximum (Wp0, Wp1, Wp2, W) de la courbe de puissance conformément à une augmentation de la température ambiante (Ta0, Ta1, Ta2, Ta3) ou de la température de dispositif.

7. Dispositif d'allumage de lampe à décharge selon la revendication 6, dans lequel le contrôleur (8) diminue la valeur de puissance maximum (Wp0, Wp1, Wp2, W) de la courbe de puissance si la température ambiante (Ta0, Ta1, Ta2, Ta3) ou la température de dispositif est supérieure ou égale à une première température.

8. Dispositif d'allumage de lampe à décharge selon la revendication 1, dans lequel le contrôleur (8) diminue la valeur de puissance maximum (Wp0) de la courbe de puissance conformément à au moins l'une d'une diminution de la tension de source et d'une augmentation de la température ambiante ou de la température de dispositif, et, si la valeur de puissance maximum (Wp0) est inférieure ou égale à une première valeur de puissance, établit la valeur de puissance maximum à la première valeur de puissance, et réduit la période de maintien (A) de la valeur de puissance maximum à la période de temps prédéterminée ou moins.

9. Dispositif d'allumage de lampe à décharge selon la revendication 8, dans lequel la première valeur de puissance est supérieure ou égale à 1,2 fois une puissance assignée pendant un allumage stable.

10. Dispositif d'allumage de lampe à décharge selon la revendication 8 ou 9, dans lequel le contrôleur (8) change une quantité de réduction de la période de maintien (A) de la valeur de puissance maximum (Wp0) conformément à la différence entre la valeur de puissance maximum et la première valeur de puissance.

11. Dispositif d'allumage de lampe à décharge selon l'une quelconque des revendications 8 à 10, dans lequel, si la tension de source est inférieure ou égale à une deuxième tension requise pour allumer la lampe à décharge (2), le contrôleur (8) réduit la valeur de puissance maximum (Wp0) de la courbe de puissance à la première valeur de puissance ou moins.

12. Dispositif d'allumage de lampe à décharge selon l'une quelconque des revendications 8 à 11, dans lequel, si la température ambiante est supérieure ou égale à une deuxième température, le contrôleur (8) réduit la valeur de puissance maximum de la courbe de puissance à la première valeur de puissance ou moins.

13. Dispositif d'allumage de lampe à décharge selon l'une quelconque des revendications 1 à 12, dans lequel le contrôleur (8) compte un temps d'extinction de la lampe à décharge (2), et lorsque l'allumage de la lampe à décharge (2) est effectué dans un état dans lequel la température de la lampe à décharge est supérieure à la température de référence, le contrôleur (8) change la valeur de puissance maximum de la courbe de puissance conformément au temps d'extinction ou à la température de la lampe à décharge (2) immédiatement avant l'allumage de la lampe à décharge.

14. Dispositif d'allumage de lampe à décharge selon l'une quelconque des revendications 1 à 13, dans lequel le contrôleur (8) compte un temps d'extinction de la lampe à décharge (2), et lorsque l'allumage de la lampe à décharge (2) est effectué dans un état dans lequel la température de la lampe à décharge est supérieure à la température de référence, le contrôleur change la période de maintien (A) de la valeur de puissance maximum de la courbe de puissance conformément au temps d'extinction ou à la température de la lampe à décharge immédiatement avant l'allumage de la lampe à décharge.

15. Phare (2) d'un véhicule (3) comprenant le dispositif d'allumage de lampe à décharge (1, 20) décrit dans l'une quelconque des revendications 1 à 14.

16. Véhicule (3) comprenant le dispositif d'allumage de lampe à décharge (1, 20) décrit dans l'une quelconque des revendications 1 à 14.
